# EUROPEAN PATENT APPLICATION

(11) **EP 3 798 799 A1**
(43) Date of publication of application: **31.03.2021**
(21) Application number: 19200364.8
(22) Date of filing: 30.09.2019
(51) Int. Cl.: G06F 3/01, A61L 9/00, F03D 9/00

(54) **CONTEXT-AWARE MULTISENSORY IMMERSIVE VIRTUAL REALITY SYSTEM**

(30) Priority: 26.09.2019 PT 2019115799
(71) Applicant: Universidade de Trás-os-Montes e Alto Douro, 5001-801 Quinta de Prados (PT)
(72) Inventor: CORREIA DE MELO, MIGUEL ÂNGELO, 4200-465 Porto (PT); CORREIA BESSA, MAXIMINO ESTEVES, 5000-801 VILA REAL (PT); CARVALHO TEIXEIRA, MÁRIO SÉRGIO, 5000-801 VILA REAL (PT); MENDES COELHO, HUGO RAFAEL, 4200-465 Porto (PT); ALVES FREIRE, HÉLIO, 2675-301 Odivelas (PT); BANDEIRA RODRIGUES MARTINS, JOSÉ LUÍS, 4200-465 Porto (PT); DOS SANTOS BRANCO, FREDERICO AUGUSTO, 5000-801 VILA REAL (PT); RAMOS MOREIRA GONÇALVES, RAMIRO MANUEL, 5000-801 VILA REAL (PT); LEITE BARBOSA, LUÍS FILIPE, 5000-801 VILA REAL (PT)
(74) Representative: Ferreira, Maria Silvina

(57) **Abstract**

The present application describes a context-aware multisensory immersive virtual reality (VR) method and system. The system enables a user in a virtual reality environment to receive multisensory stimuli (audio-visual, haptics, and olfaction stimulus) such as aromas, wind, and temperature. The user can move in a pre-defined area, where the different stimuli will be delivered based on his location and in a coherent manner according to the VR application scene being depicted. The system is composed by a computational unit, a sensory-support structure where a set of stimuli suppliers are coupled, controlled by controllers, and a set of sensors placed on the user with the objective of measure how the different stimuli reach the user. The sensors communicate with the computational unit, which decides the effort of which stimuli supplier must do to produce the desired stimulation in the user.

## Description

### Technical Field

The present application describes a context-aware multisensory immersive virtual reality method and system.

### Background art

The present invention generally relates to the field of virtual reality space, and it consists of a fully-automated context-aware method and system for delivering multisensory content to the users in virtual reality environments.

The development of virtual reality (VR) technology has rapidly increased over the last few years. As virtual reality technology advances, new virtual reality applications in a broad spectrum of areas have been adopted successfully, such as training and certification, education, security or entertainment. Depending on the goals of the virtual reality application, there are several challenges and requirements that need to be addressed to ensure a fully-functional and effective virtual reality system.

Humans perceive the surrounding environment through all their senses. Conventional VR systems heavily depend on the stimulation of only visual and audio. This dependence on only two senses can be a constraint, especially if one takes into consideration that VR main purpose is to transport its users to a virtual environment (VE) by offering a coherent perceptual feedback correspondent to the actions that are taking place within that VE (Minsky, 1980).

Literature shows that multisensory stimulation in VR is of notable importance as the more human's senses are engaged in a VR application, the more immersive is the experience and consequently the better is its efficiency (Slater and Wibur, 1997; Din et al., 1999; Frohlich and Wachsmuth, 2013, Feng, Dei and Lindeman, 2016). By stimulating the different human senses, one achieves a degree of immersion capable of creating the illusion of "being there".
However, merely adding more stimuli to a simulation it may only affect the way a participant responds to a given stimulus but not his/her experience (Biocca, Frank, Kim, and Choi, 2001) or even have a negative impact as it can impose an extra cognitive load to users (De Barros and Lindeman, 2013). Thus, it is of critical importance to ensure that multisensory stimulation is coherent with the virtual environment to make the most of the VR experience. Therefore, the display of the stimulus (hereinafter referred to as rendering) must be achieved in real-time to achieve coherency between the real and the virtual stimulus (Bessa, Melo, Augusto Sousa, and Vasconcelos-Raposo, 2018). Coherency includes not only the synchronicity of the stimulus also its intensity.
Multisensory delivery is complex, and there are no established systems and/or methodologies for such. Multisensory VR solutions are scarce and lack in ensuring a coherent stimulation of the different senses correspondent to the actions that are taking place within the simulation. Examples of multisensory VR applications are the multisensory system for tactical training (McGregor et al., 2016), the multisensory system for VR experiences (Jones et al., 2018), or the Multisensory Apulia Touristic Experience (Manghisi et al., 2017). Despite these proposals being a reference in the very few multisensory virtual reality systems available, they have several limitations. For instance, the multisensory system for tactical training consists of a wearable multisensory multidirectional force feedback garment that can deliver haptic feedback on users based on the actions that take place in the VE. However, it is limited to the arms and the torso of the users, and as it is wearable, blocks the possibility of delivering additional stimuli such as wind.

The multisensory system for VR experiences proposed by Jones et al. (2018) is inspired by Heilig's Sensorama Simulator that is considered by many as the first immersive multisensory VR experience (Heilig, 1962). Jones et al. (2018) have evaluated 360 videos and combined the viewing of the 360 videos with a smell and/or heat stimulation. The main limitation of this system is that is only prepared for video 360 rather than virtual reality environments where the user can interact and navigate freely. Also, the experience requires the user to be in a fixed position to receive the multisensory stimuli.

As for the Multisensory Apulia Touristic Experience, it is the most similar solution available comparing to the system here proposed: it consists of a transportable structure that provides multisensory stimulation by using a display wall, a 3D audio system, odour diffusers and a set of devices that allow haptic feedback, namely a water nebulization system, air conditioning, and infrared heating panels. The user interacts with the system using gestures. Despite this solution being able of providing full multisensory stimulation, there is a significant constraint: to deliver the stimulus properly users must be in a fixed position which means that if participants move the stimulus are inconsistently delivered and thus prejudicing the whole experience.

This invention allows overcoming the limitations of the state-of-the-art, proposing and enabling the delivery of real-life like virtual experiences by using a system with arrays of stimulus suppliers in a structure that can be customized for different purposes such as product demonstration, training or marketing. The system is further supported by a fully-automated context-aware method that, depending on the user's position in the virtual environment and on the physical space, calculates how each stimulus should be delivered through parameters such as timing, intensity and duration. Such invention will allow delivering coherent and credible multisensory virtual reality experiences.

### Summary

The present application describes a multisensory immersive virtual reality system characterised by comprising:
- at least a sensory-support structure (140), comprising at least one stimulus supplier, and at least a tracking system to determine the user's (110) position within the limited area (170);
- at least one stimulus sensor (150) and a head-mount display (HMD) (120) coupled in the user (110), and an audio device (130);
- a computational unit (280) configurated to communicate with said tracking system and Stimulus Sensors (150); said computational unit (280) comprising at least one controller configurated to communicate and activate the correspondent said stimulus supplier; said computational unit (280) comprising at least one controller configurated to communicate to the said head-mounted display (s) (HMD) (120) and said audio device (s) (130);

Characterized by processing real-time tracking information and real-time stimuli effects information collected from the sensors installed in the user (110), immersed in the real-time virtual environment, in order to readjust the stimuli supplier's effort to achieve a real-time stimuli delivery coherent with the depicted virtual experience.

In one embodiment of the system, the tracking system comprises the use of Tracking Cameras (160)and Tracking Sensors (180).

In yet another particular embodiment of the system, the Tracking Cameras (160) comprises the installation in the sensory-support structure (140).

In yet another particular embodiment of the system, the Tracking Sensors (180) comprises the installation on the user (110).

In yet another particular embodiment of the system, the audio device (130) comprises the use of headphones or speakers.

In yet another particular embodiment of the system, the audio device (130) comprises the installation on the user (110) or in the sensory-support structure (140).

In yet another particular embodiment of the system, the delivery of a stimulus to the user (110) is synchronised with the real-time rendering of the virtual environment.

In yet another particular embodiment of the system, the real-time rendering of the virtual environment is provided to the user (110) in an open real-world environment that allows full freedom of movement within the limited area (170).

In yet another particular embodiment of the system, the rendering of at least one safety marker within the limited area (170) is made in order to alert the user of the proximity of the border.

In yet another particular embodiment of the system, the stimuli supplier comprises the use of wind (141), aroma (142) and temperature (143) devices.

In yet another particular embodiment of the system, the wind device (141) comprises the use of fans.

In yet another particular embodiment of the system, the aroma device (142) comprises the use of at least a concealed container where the aroma to be delivered is stored.

In yet another particular embodiment of the system, the temperature device (143) comprises the use of heat lamps.

In yet another particular embodiment of the system, the head-mount display (HMD) (120) comprises the use of a wearable display that fits on the user's (110) head.

In yet another particular embodiment of the system, the stimulus sensors (150) comprise the use wearable anemometers capable of detecting the direction and intensity of the wind stimulus and wearable aroma sensors capable of detecting odours.

In yet another particular embodiment of the system, the computational unit (280) comprises at least a vision controller (220), an audio controller (230), a wind controller (240), an aroma controller (260), and a temperature Controller (250).

The present application further describes a method for providing a context-aware immersive multisensory virtual reality experience comprising the steps of:
- processing real-time tracking information from the sensors coupled on the user including movements, position, and rotation;
- calculate and adjust the effort of the stimuli suppliers based on the virtual experience settings;
- triggering at least one of the stimuli suppliers to deliver the correspondent stimulus automatically.

In yet another particular embodiment of the method, the stimuli supplier's effort is automatically calculated and regulated, based on the following variables:
- real-time tracking information of user's position and orientation;
- the stimuli supplier's position;
- how the stimuli should be perceived and;
- the real-time capture of the stimulus information that arrives at the user.

### General Description

Most of the experiences in virtual reality focus on the audio-visual stimulus. However, other stimuli such as smell, haptic or taste can be incorporated in the experiments to increment the immersion of the user and, consequently, the effectiveness of the virtual reality experience. However, such senses need to exist physically (e.g. wind simulation) or chemically (e.g. synthesised smell) to be included in a virtual environment. The process of including additional stimuli is not straightforward mainly due to the apparatus that is required to achieve it and to its synchronisation with the audio-visual stimulus that is being delivered.

The multisensory delivery is a challenge by itself when the user is in a fixed position and even more challenging the virtual reality experience allows the user to move freely in a specific area as the apparatus is usually stationary, i.e. does not follow the user or does not consider the user position to ensure that the stimulus is delivered/perceived as it should.

The present application describes a context-aware multisensory immersive virtual reality system and method for stimuli delivery of an immersive virtual reality experience to a user are described herein.

### Brief description of the drawings

For a better understanding of the present application, figures representing preferred embodiments are herein attached which, however, are not intended to limit the technique disclosed herein.

The present general inventive concept below will be better understood when read in conjunction with the accompanying drawings of which:

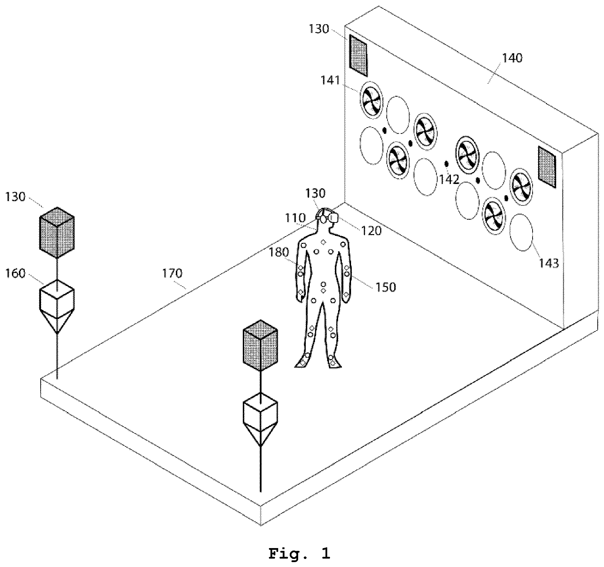

Fig. 1 illustrates one possible configuration of the apparatus regarding the present invention, wherein the user (110) is located in a virtual reality limited area (170), being equipped with Tracking and Stimulus Sensors (150), a head-mounted display (HMD) (120) and audio device (130) (headphone(s) / speaker(s)), being tracked by a tracking system . Said tracking system is based on inside-out tracking concept, and it is composed by a set of tracking cameras (160) fixed around the trackable area (170), and a set of stimulus sensors (150) and tracking sensors (180) that are worn by the user (110). Such setup allows the positional tracking, determining how the tracker position changes in relation to the environment. The sensory-support structure (140) accommodates the devices that will be responsible for delivering the other haptic stimuli like the wind simulation system (141), the aroma simulation system (142) and the temperature simulation system (143).

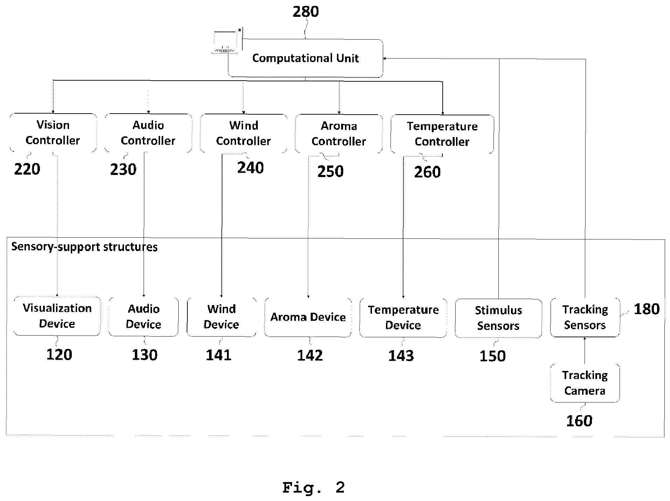

Fig. 2 illustrates one possible configuration of the main components that the present invention wherein a computational unit (280) is characterized by comprising a set of controllers, namely a vision controller (220), an audio controller (230), a wind controller (240), an aroma controller (250) and a temperature controller (260). In its turn, each controller of this set of controllers is directly connected to the correspondent device, namely and correspondingly, the visualization device (120), the audio device (130), the wind device (141), the aroma device (142), and the temperature device (143). The computational unit (280) also collects and analyses the information from the Stimulus Sensors (150) and Tracking Sensors (180) that are applied to the user (110), and also from the tracking camera (160) .

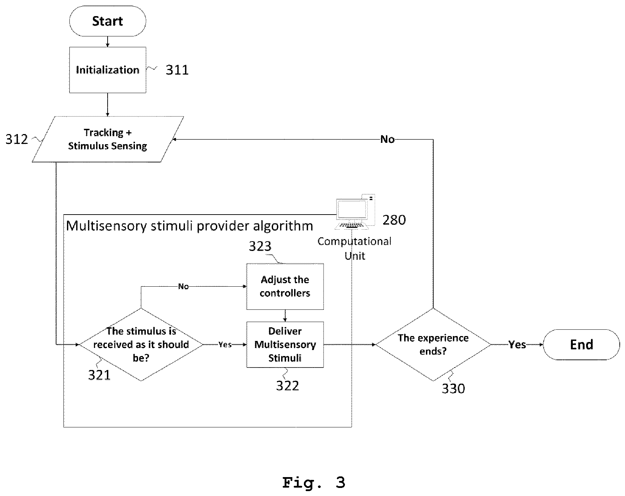

Fig. 3 illustrates the configuration of the workflow of the developed system where the method is subject to an initialisation process (311) that evolves to a tracking and stimulus sensing (312) analysis. The computational unit (280) performs the interpretation of the stimulus delivery analysis (321) stage, the multisensory stimuli delivery (322) and also the multisensory stimuli provider algorithm (323). The end experience analysis (330) determines whether if the process iterates or ends.

### Description of Embodiments

Regarding the figures, some embodiments are now described in more detail, which is however not intended to limit the scope of the present application.

A particular embodiment of the context-aware multisensory immersive virtual reality system is disclosed herein in Figure 1 of the drawings, representing a possible configuration of the present invention. A user (110) is experiencing a virtual reality content in a limited area (170), being able to move freely in said area, and being tracked by means of a tracking system composed by a set of tracking cameras (160) and tracking sensors (180). The user (110) is equipped with a Head-Mounted Display (HMD) (120) that delivers the visual or audio-visual stimulus. The present invention is not intended to be in any way limited to the HMD. The three-dimensional, immersive spatial audio device may be provided by an audio device (130) (headphone(s) / speaker(s)) worn by the user (110), and it can be an independent device, or integrated into the HMD (120). The present invention is not intended to be in any way limited to the headphone(s)/speaker(s) type/quality, nor in the audio characteristics. The additional stimulus (smell and haptics) are delivered by the apparatus in a sensory-support structure (140). The sensory-support structure (140) is an easy way to accommodate the devices that will be responsible for delivering the other stimuli, but other forms can be achieved as the present invention is not intended to be in any way limited in this regard as, for instance, having the stimulus delivery device around the area covered by the apparatus. An alternative is to have the devices responsible for the stimulus delivery directly worn by the user (110) or integrated into the HMD (120). For delivering aromas, captured or synthesised aromas in concealed containers are used (142); for haptics such as wind, fan(s) (141) can be used; and for temperature simulation, for instance, heat lamps can be used (143). Other stimuli suppliers can be used/added as the present invention is modular, and it is not intended to be in any way limited in these regards. The user wears clothes with integrated Stimulus Sensors (150) and Tracking Sensors (180) to collect data that will define how the stimulus should be delivered.

In this particular embodiment, and as disclosed in Figure 2, the system of the present invention further comprises a Computational Unit (280) that is responsible for managing the multisensory virtual reality content and how the stimulus should be delivered. The Computational Unit (280) communicates with the controllers responsible for each stimulus such as the Vision Controller (220), the Audio Controller (230), the Wind Controller (240), the Aroma Controller (250), or the Temperature Controller (260). The present invention is not intended to be in any way limited to the number of Stimulus Controllers, and it supports the addition/removal of other Stimulus Controllers.

Each Stimulus Controller communicates with the corresponding Stimulus Supplier to deliver the stimulus in a controlled manner as defined by the Computational Unit (280). Thus, as Figure 2 of the drawing illustrates, the Vision Controller (220) communicates with the Visualization Device (120), the Audio Controller (230) communicates with the Audio Device (130), the Wind Controller (240) communicates with the Wind Device (141), the Aroma Controller (250) communicates with the Aroma Device (142), and the Temperature Controller (260) communicates with the Temperature Device (143). The present invention is not intended to be in any way limited to the number of Stimulus Devices, and it supports the addition/removal of other Stimulus Devices. The system of the present invention also comprises the Stimulus Sensors (150) that detect how the stimulus is delivered to the user in regards of intensity and direction, and also a tracking system composed by a set of Tracking Sensors (180) and Tracking Cameras (160) that capture real-time tracking information such as the user position, orientation, and movements.

All the information collected by the Stimulus Sensors (150) and Tracking Sensors (180) is sent to the Computational Unit (280) that verifies if the stimuli are being delivered as specified by the virtual reality content. In case there is a discrepancy between the virtual reality scene specification and the stimuli that are delivered to the user, the Computational Unit (280) reconfigures the Controllers to ensure that the Stimulus Devices deliver the stimuli accordingly pre-established configuration. The reconfiguration might include timing, duration or intensity of a given stimulus.

The next embodiment provided aims to illustrate general concepts and should not be taken as limiting in nature, being directed to an immersive virtual reality system for one user but can be extended straightforwardly to multiuser. Before the initialization of the immersive virtual reality experience, the user (110) is equipped with the HMD (120), audio device (130) (if applicable), Tracking Sensors (180), and Stimulus Sensors (150) that will collect data related with the intensity which the stimulus reaches the said user (110) based on anemometers and aroma sensors. The user (110) position and his movements are tracked following an inside-out approach supported by the use of Tracking Cameras (160). Alternatively, the audio might be delivered via speakers placed (130) according to the virtual reality content specificities and the user positioning in the limited area (170). The visual and audio information can be either delivered via a communicable connection that may be a wired electrical connection or wirelessly by using any suitable wireless communication protocol. The Computational Unit (280) can be located remotely from the HMD or, in an alternative embodiment, said unit can be mounted on the HMD or even in the user clothing, for example. The Computational Unit (280) needs to have information about the localization of the sensory-support structure (140) and the position of each element array of the stimulus delivery devices such as the position of each aroma supplier (142), each fan (141), and each heat lamp (143). The controllers of the stimulus delivery system communicate with the computing system, which controls them regarding stimulus delivery.

One crucial factor in the immersive virtual reality experience is the stimuli congruence received by the users and the virtual content that is being displayed to ensure the experience's effectiveness. In the embodiment described in the previous paragraph, the user can move around the limited area, and the stimuli (besides the visual and/or the audio) are delivered from a fixed place, i.e. by sensory-support structure. This implies that, when starting the virtual reality content, an automated calibration process takes place to synchronise the user's position and orientation with the apparatus to ensure that the stimuli provided by the sensory-support structure are all delivered congruently. This step ensures that there are no conflicts regarding the user orientation and the direction from where the stimulus is delivered.

As Figure 3 of the drawings illustrates, when a virtual reality application is used by a user, first, there is an Initialization process (311). The initialization process is responsible for verifying the integrity of the system and how the stimuli should be delivered, having as reference the initial position of the user within the apparatus arena. More specifically, the initialisation process consists of a verification process that includes a diagnostic test to verify the condition of every component of the system. The Initialization process (311) is also responsible for establishing a connection between the Tracking and Stimulus Sensors (312) and the Computational Unit (280), so the information regarding the user position, orientation and how the stimulus reaches the user is sent to the Computational Unit (280). Based on such information, the Computational Unit (280) computes how the stimulus should be delivered regarding variables such as timing, duration and intensity.

During the exposure to the virtual reality content, the Tracking and Stimulus Sensing (312) information are continuously being sent to the Computational Unit (280) that verifies if the stimuli are being correctly delivered. For this, a method that considers:
(a) the data collected from the sensors placed in the user; and,
(b) how the virtual experience specifies how the stimulus should be perceived is used.

Based on such information, the method calculates how the stimuli should be emitted to cause the intended stimuli perception to the user. The stimulus suppliers deliver the stimulus to the user with the intensity, duration and timings defined by the proposed method. The method considers the position of the user in the reference area and the distance which the user is located concerning the sensory-support structure in order to calculate the necessary stimulus supplier to be activated to reproduce the correct effect. Furthermore, the computational unit can adjust the stimuli supplier effort in real-time, gathering the values that are collected by the sensors positioned in the user. For instance, if the user is far from the stimuli supplier when delivering wind, more than one fan can be necessary to produce the perceptual effect necessarily, while if the same user is closer to the sensory-support structure, one fan might be just enough.

Once the user can move freely but is limited to a certain area, it is necessary to notify the user when the user is near to the area limits. This notification can be given via different stimuli to the user and/or used redirect techniques to move the user away from the border.

It will be apparent to a person skilled in the art, from the foregoing description, that modifications and variations can be made to the described embodiment, without departing from the scope of the invention as claimed.

## Claims

1. Multisensory immersive virtual reality system **characterised by** comprising:
• at least a sensory-support structure (140), comprising at least one stimulus supplier, and at least a tracking system to determine the user's (110) position within the limited area (170);
• at least one stimulus sensor (150) and a head-mount display (HMD) (120) coupled in the user (110), and an audio device (130);
• a computational unit (280) configurated to communicate with said tracking system and Stimulus Sensors (150); said computational unit (280) comprising at least one controller configurated to communicate and activate the correspondent said stimulus supplier; said computational unit (280) comprising at least one controller configurated to communicate to the said head-mounted display(s) (HMD) (120) and said audio device(s) (130);
**characterized by** processing real-time tracking information and real-time stimuli effects information collected from the sensors installed in the user (110), immersed in the real-time virtual environment, in order to readjust the stimuli supplier's effort to achieve a real-time stimuli delivery coherent with the depicted virtual experience.

2. System according to claim 1 **characterized by** the tracking system comprising the use of Tracking Cameras (160)and Tracking Sensors (180).

3. System according to claim 1 **characterized by** the Tracking Cameras (160) comprising the installation in the sensory-support structure (140).

4. System according to claim 1 **characterized by** the Tracking Sensors (180) comprising the installation on the user (110).

5. System according to claim 1 **characterized by** the audio device (130) comprising the use of headphones or speakers.

6. System according to claim 1 **characterized by** the audio device (130) comprising the installation on the user (110) or in the sensory-support structure (140).

7. System according to claim 1 **characterized by** the delivery of a stimulus to the user (110) being synchronised with the real-time rendering of the virtual environment.

8. System according to claim 1, **characterized by** real-time rendering of the virtual environment being provided to the user (110) in an open real-world environment that allows full freedom of movement within the limited area (170) .

9. System according to claim 1 **characterised by** comprising the rendering of at least one safety marker within the limited area (170) in order to alert the user of the proximity of the border.

10. System according to claim 1 **characterised by** the stimuli supplier comprising the use of wind (141), aroma (142) and temperature (143) devices.

11. System according to claim 10 **characterised by** the wind device (141) comprising the use of fans.

12. System according to claim 10 **characterised by** the aroma device (142) comprising the use of at least a concealed container where the aroma to be delivered is stored.

13. System according to claim 10 **characterised by** the temperature device (143) comprising the use of heat lamps.

14. System according to claim 1 **characterised by** the head-mount display (HMD) (120) comprising the use of a wearable display that fits on the user's (110) head.

15. System according to claim 1 **characterised by** the stimulus sensors (150) comprising wearable anemometers capable of detecting the direction and intensity of the wind stimulus and wearable aroma sensors capable of detecting odours.

16. System according to claim 1 **characterised by** the computational unit (280) comprising at least a vision controller (220), an audio controller (230), a wind controller (240), an aroma controller (260), and a temperature Controller (250).

17. Method for providing a context-aware immersive multisensory virtual reality experience according to any of the preceding claims, **characterised by** comprising the steps of:
• processing real-time tracking information from the sensors coupled on the user including movements, position, and rotation;
• calculate and adjust the effort of the stimuli suppliers based on the virtual experience settings;
• triggering at least one of the stimuli suppliers to deliver the correspondent stimulus automatically.

18. Method according to previous claim 18, wherein the stimuli supplier's effort is automatically calculated and regulated based on the following variables:
• real-time tracking information of user's position and orientation;
• the stimuli supplier's position;
• how the stimuli should be perceived and;
• the real-time capture of the stimulus information that arrives at the user.

## Amended claims

### Amended claims in accordance with Rule 137(2) EPC.

1. Multisensory immersive virtual reality system for stimuli delivery to a user, comprising:
at least a sensory-support structure (140) and a limited area (170),
said structure (140) comprising
at least one stimulus supplier, and
at least a tracking system to determine the user's (110) position within the limited area (170);
said limited area (170) comprising at least one safety marker;
at least one stimulus sensor (150), adapted to the user's (110) clothes, and a head-mount display (HMD) (120) and an audio device (130) adapted to the user's (110) head; and
a computational unit (280), configurated to communicate with said tracking system and said at least one stimulus sensor (150);
said computational unit (280) comprising at least one controller configurated to communicate and activate the correspondent said at least one stimulus supplier of the sensory-support structure (140);
said computational unit (280) comprising at least one controller configurated to communicate to the said head-mounted display(s) (HMD) (120) and said audio device(s) (130);
**characterized by**
the tracking system comprising tracking cameras (160) and tracking sensors (180), processing real-time tracking information of the user (110) position, orientation and movements; and
the computational unit (280) being adapted to process the gathered information from the at least one stimulus sensor (150) installed in the user (110), alerting the user (110) for the area limits of the limited area (170) through the at least one stimulus sensor (150), and readjusting the at least one stimulus supplier delivery intensity.

2. System according to previous claims, wherein the Tracking Cameras (160) are fixed around the trackable area (170).

3. System according to previous claims, **characterized by** the Tracking Sensors (180) being worn by the user (110) .

4. System according to claim 1, **characterized by** the audio device (130) comprising headphones or speakers.

5. System according to claim 1 and 5, **characterized by** the audio device (130) being worn the user (110) or in the sensory-support structure (140), or around the trackable area (170).

6. System according to claim 1, **characterized by** the at least one stimulus supplier delivery intensity being synchronised with the user's (110) position and orientation with the apparatus.

7. System according to claim 1, **characterized by** the user (110) being able to move freely in within the limited area (170).

8. System according to claim 1, **characterised by** the stimuli supplier comprising a wind (141), aroma (142) and temperature (143) devices.

9. System according to claim 9, **characterised by** the wind device (141) comprising fans.

10. System according to claim 9, **characterised by** the aroma device (142) comprising at least a concealed container where the aroma to be delivered is stored.

11. System according to claim 9, **characterised by** the temperature device (143) comprising heat lamps.

12. System according to claim 1, **characterised by** the head-mount display (HMD) (120) comprising a wearable display that fits on the user's (110) head.

13. System according to claim 1 **characterised by** the at least one stimulus sensor (150) comprising wearable anemometers capable of detecting the direction and intensity of the wind stimulus, and wearable aroma sensors capable of detecting odours.

14. System according to claim 1, **characterised by** the computational unit (280) comprising at least a vision controller (220), an audio controller (230), a wind controller (240), an aroma controller (260), and a temperature Controller (250).

15. Method for providing a context-aware immersive multisensory virtual reality experience to a user (110), according to the system described in any of the preceding claims, **characterised by** comprising the steps of:
• processing real-time tracking information from the tracking sensors (180) coupled on the user including movements, position, and rotation;
• calculate and adjust the stimuli suppliers intensity based on the gathered information from the at least one stimulus sensor (150);
• triggering at least one of the stimuli suppliers to deliver the correspondent stimulus automatically.

16. Method according to previous claim 18, wherein the stimuli supplier's intensity is automatically calculated and regulated based on the following variables:
• real-time tracking information of user's position and orientation;
• the stimuli supplier's position;
• how the stimuli should be perceived and;
• the real-time capture of the stimulus information that arrives at the user.
